Europäisches Patentamt

**European Patent Office**

Office européen des brevets

(19)

(11) Publication number: **0 071 843**
A2

(12) # EUROPEAN PATENT APPLICATION

(21) Application number: **82106669.3**

(22) Date of filing: **23.07.82**

(51) Int. Cl.³: **G 01 B 11/26**

(30) Priority: **03.08.81 IT 2334981**

(71) Applicant: **Donato, Giuseppe, Via Mac Mahon 77, I-20155 Milano (IT)**

(43) Date of publication of application: **16.02.83 Bulletin 83/7**

(72) Inventor: **Donato, Giuseppe, Via Mac Mahon 77, I-20155 Milano (IT)**

(84) Designated Contracting States: **AT BE CH DE FR GB LI NL SE**

(74) Representative: **Modiano, Guido et al, MODIANO & ASSOCIATI S.A.S. Via Meravigli, 16, I-20123 Milan (IT)**

(54) **Apparatus for checking the geometry of wheels.**

(57) The apparatus comprises digital scales (11, 13) for reading the wheel angles having a plurality of columns including a sequence of black and white spaces arranged in conformity with a given binary code. The scales (11, 13) are projected onto detection flags (16, 17) having a slit (23) whereat optical-electronic sensors (24) are arranged effective to detect the particular succession of black and white spaces in the column projected at the slit (23), and supply it to an electronic processing unit (30). Thus an apparatus is provided which eliminates the need of periodically checking the calibration of its components, thereby reducing the time and costs involved in the checking operations, and providing precise and reliable results.

ACTORUM AG

0071843

This invention relates to an apparatus for checking the geometry of wheels.

As is known with today's cars, in order to make driving safer and more comfortable and avoid side skidding and premature wear of tires, it is necessary to periodically arrange for checking the trim of the car itself, namely to check the characteristic angles of the wheels, which have been selected by their manufacturers on the basis of safety considerations and after studying the optimal behavior of the mechanical members connected with the suspension system.

Such checking procedure covers wheel camber (i.e. the angle formed by a plane containing the wheel centerlines with the vertical to the ground, when viewing the vehicle frontally), wheel toe-in or toe-out (i.e. the angle formed by a plane containing the wheel centerline and the longitudinal plane of the vehicle when viewed from above), steering geometry, axle parallelism and alignment, wheel base distance, transverse inclination of the center pillar or spindles, the pillar incidence (i.e. the angle formed by the pillar axis with a vertical to the ground, when viewing the vehicle from one side), as regards the vehicle front axle, and the wheel camber and toe-in, as regards the rear axle.

For carrying out such checks on the wheel geometry, there are known devices both of the optical and electronic types.

Devices of the electronic type comprise projector

- 3 -

0071843

lamps which project a multiple beam comprising a number of reading scales, a fixed one for detecting the camber angle, an adjustable one for the pillar angle of incidence, a swinging pointer mounted on a pendulum, various scales for toe-in and a cross for projector alignment. With said projector lamps, there are connected suspended panels and fixed panels on which the scales are projected which comprise essentially goniometers for measuring angular displacements (camber, incidence) or metric rules for measuring linear displacements (toe-in). These devices further include flags with metric scales onto which a cross is projected to measure other angles, such as alignment. Said optical apparatus have the advantage of requiring no calibration or adjustments of any kind, and of not undergoing measurement variations due to either ageing or wear. However, said optical apparatus require a series of manual operations to achieve an exact arrangement of the elements in carrying out the various measurements, and the operator must have some knowledge of mathematics in order to correctly understand the measurement indications, thereby the use of such apparatus often represents a considerable problem for the operators, usually a tire repair man or a mechanic, when put in charge of the checking operations.

To overcome such drawbacks, electronic apparatus have been developed which comprise essentially transducers of the analog type. Said transducers are usually potentiometers of either the wire variety, or plastics film variety, inductive potentiometers, synchro-

0071843

differential ones, linear transformers, etc. All
these transducers are characterized in that they
supply a voltage signal which is proportional to the
displacement of their shafts and is amplified and
transformed into a continuous signal for application
to an analog-to-digital converter.

Such transducers, however, have the disadvantage
that the signal supplied is dependent on various
factors, such as supply voltage, temperature, and in
some cases use as well. Consequently, it becomes
necessary to periodically check the calibrations of
transducers, by placing them on special calibrating
stands and effecting the calibration proper for each
individual measurement. The calibration operation
is performed in two stages: first, the scale must be
set or zeroed, then gain is to be calibrated, that is
the scale range. These two operations are partly
interactive  so that,for a reliable result,it is
often necessary to repeat them twice. Since it is
necessary to carry out two or three calibrations for
each projector lamp, the total operations must be
repeated eight to twelve times, thereby complete
calibration takes a lot of time. Moreover, said
calibration is an extremely delicate operation which
must be carried out by skilled personnel if further
deviation from the set value are to be avoided, in
that, for example, the calibrating gauges require
to be perfectly set.

Another disadvantage of electronic devices
resides in that, even when the calibration is carried

0071843

out by skilled personnel, errors may originate from the gauge itself going out of adjustment, if subjected to mechanical damage or variations due to yield stressing of the materials. A further disadvantage of this type of apparatus is that the calibration stand is very expensive.

Accordingly the task of this invention is to provide an apparatus for checking the geometry of wheels, which combines all the advantages of current optical and electronic apparatus, while having none of their drawbacks.

Within this task it is an object of the invention to provide a device which can ensure exact and reliable results because not liable to go out of adjustment with its components.

Another object of this invention is to provide a device for checking the geometry of wheels, which has a lower cost than conventional electronic devices, in that it does away with the need for a calibrating stand for checking and tuning up the detectors.

A further object of this invention is to provide a device as indicated, which can be operated by unskilled personnel and no longer requires the periodic attendance by a specialized operator able to perform the calibration operations.

Yet another object of the invention is to provide a device which allows the diagnosis operations to be completed within a much shorter time than conventional devices, through simplification of the manual handling involved in positioning the various elements and the elimination of the algebraic sum operation that the operator had to perform with conventional devices to obtain the total toe-in value.

Yet another object of this invention is to provide a device as indicated, which is contruction-wise simple especially from the mechanical standpoint, owing to the elimination of transducers and precision mechanisms as included in conventional electronic apparatus.

According to one aspect of the invention the above task and objects as well as yet other objects, such as will be apparent hereinafter, are achieved by an apparatus for checking the geometry of wheels, comprising a pair of projector lamps, reading scales, mirrors for reading the wheel toe-in, and flags or panels for measurement detecting, characterized in that said reading scales are digital scales.

Further features and advantages will be apparent from the following description of a preferred, but not limitative, embodiment of this apparatus for checking wheel geometry, with reference to the accompanying illustrative, though not restrictive, drawings, where:

Figure 1 is a schematical top view of the device according to the invention, as applied to the a car wheels for checking the geometric trim of the same;

Figure 2 is a side view of a projector lamp belonging to the inventive apparatus;

Figure 3 is a detail view of a detecting or bring-out panel;

Figure 4 is a detail representation of the scale for toe-in measurements;

Figure 5 is a detail view of the scale for camber and incidence measurements; and

Figure 6 is a block diagram of the electric circuit associated with the apparatus according to the invention.

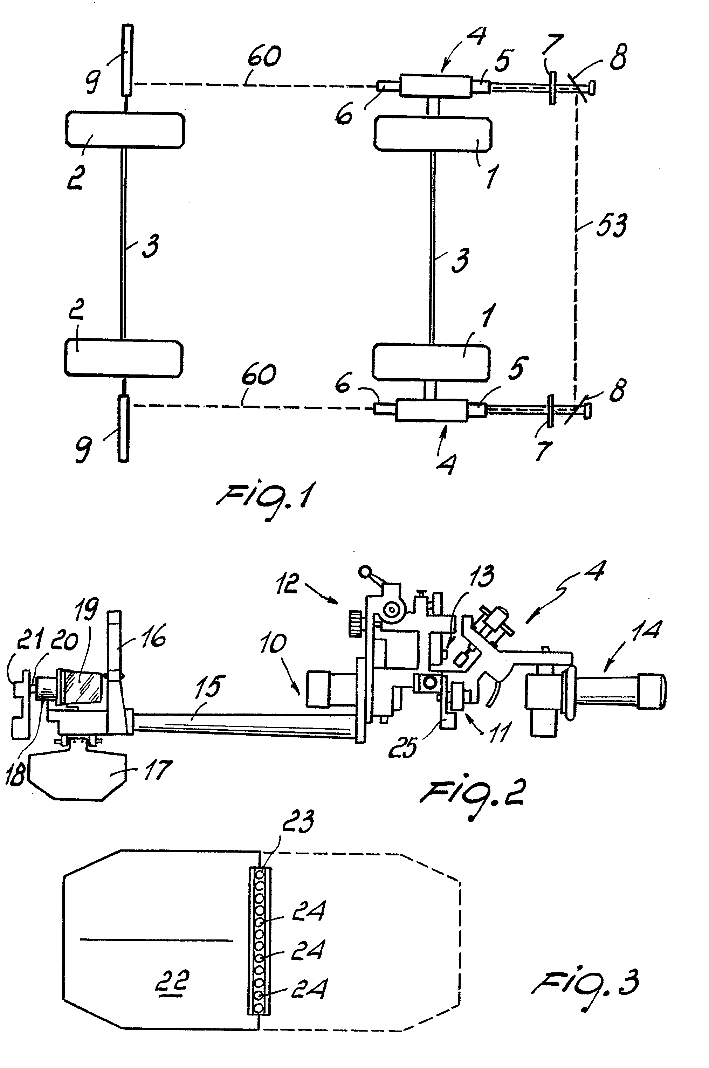

Figure 1 shows this apparatus as applied to a car the geometric trim whereof is to be checked. Of the car, only the front wheels 1 are shown, along with the rear wheels 2 and axles 3. The apparatus is only schematically illustrated, and in particular there may be observed the projector lamps 4 fastened to the front wheels 1, the optics 5 of projection of the toe-in, camber, and incidence scales, the optics 6 of projection of the rear alignment cross, the panels or flags 7 for reading camber and incidence, and the mirrors 8 for transferring the toe-in scale. In that figure, the flag for reading toe-in is not visible because hidden behind the other elements. To the rear wheels, there are fastened graduated flags 9 for reading wheel alignment, of a known design. Figure 2 shows more in detail a projector lamp 4 belonging to the inventive device. In that figure, there may be identified the optics 10 for projecting the toe-in measurement scale (said scale being indicated at 11), an optics 12 for projecting the camber and incidence measurement scale (said scale being indicated in the figure with the reference numeral 13), and an optics 14 for projecting    a rear alignment cross. To the projection

0071843

assembly proper, there is secured, at one end thereof, a flag supporting staff or rod 15, the other end whereof carries the fixed flag 16 (corresponding to 7 in Figure 1), onto which the camber and incidence measurement scale is projected, and the suspended flag 17, onto which is projected the toe-in measurement scale, after undergoing reflection by the mirror 8 associated with the projector lamp secured to the opposite wheel.

To the flag supporting rod 15, there is also attached a support 18 for the mirror assembly composed of a mirror 19 (indicated at 8 in Figure 1), a shaft 20, and a pendulum 21, which are rigid with one another but rotatable, through bearings not shown, with respect to the rod 15 such as to keep constantly vertical regardless on the projector lamp inclination. Figure 3 shows in detail a flag which comprises an opaque element 22 formed with a slit 23, whereat there are provided optical-electronic sensors 24, e.g. phototransistors.

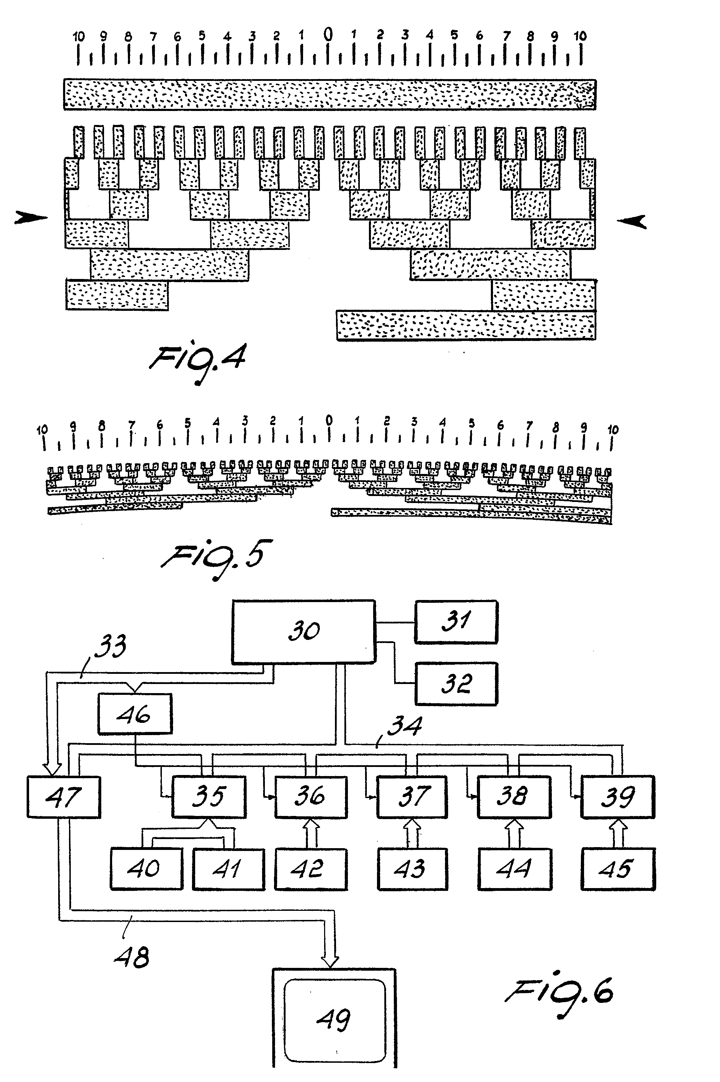

Figures 4 and 5 show, respectively, the toe-in measurement scale and camber and incidence measurement scale. Both scales comprise a plurality of columns wherein light opaque regions and light transparent regions follow one another, being arranged in agreement with a given binary code, e.g. the Gray code, such that onto the flags there are projected bright and dark regions reproducing the scale patterns. Above said columns, and for each measurement scale, there is provided an analog measurement scale to also enable

0071843

measurements of a traditional character.

Figure 6 shows a block diagram of the electronic circuits associated with the projectors. In that diagram, there may be recognized a microprocessor 30 associated with a memory 31 for the program, and with a memory 32 for the data, and wherefrom there extend an address bus 33 and data bus 34. To the data bus 34, there are connected five input gates 35 to 39, which receive data from the outside through input terminals 40 to 45. In particular, the gate 35 is connected to the terminal 40 for selecting the measurement type and to the gate 41 for selecting the wheel rim diameters, the input gate 36 is connected to the transducer 42 for the camber of the left-hand wheel, the input gate 37 is connected to the transducer 43 for the toe-in of the left-hand wheel, the gate 38 is connected to the transducer 44 for the camber of the right-hand wheel, and the gate 39 is connected to the transducer 45 for the toe-in of the right-hand wheel.

The address bus 33 is connected to an address decoder 46 and a video interface 47, also connected to the data bus 34. The video interface supplies the data processed in the microprocessor 30 to a display unit 49 over the channel 48.

The operation will be presently discussed, and in particular the procedure for measuring camber, incidence and toe-in of the front wheels, making reference to Figure 1.

For measuring camber, the related scale 13 is projected by means of the projector lamp 4 onto the

- 10 -                    0071843

onto the flag 7 (16 in Figure 2) associated with that projector. If the wheel 1 has camber from the vertical, the projector 4 and fixed flag will also be inclined by the same angle. By contrast, the related scale can be swung and is kept in a perfectly vertical position by a pendulum system 25. Consequently, at the slit of the flag 7, there will be projected a column of the scale which is no longer the zero one but rather the one corresponding to the particular camber angle of the wheel 1. Thus, the phototransistors 24 located at the slit 23 of the flag will detect the particular sequence of white spaces and black spaces falling thereat and transfer that code to the electronic members which process it as described hereinafter.

Measurement of pillar incidence is similar.

For toe-in measurement, the related fixed scale 11 is projected onto the mirror 8 associated with the projector, and thanks to its orientation and to the fact that it keeps in the vertical position, it always reflects the beam 53 onto the flag 17 associated with the projector connected to the other wheel. If a toe-in angle other than zero exists, the related scale will be shifted with respect to the flag in a horizontal direction to the right or to the left by a distance univocally linked to the toe-in angle. Consequently, at the slit, instead of the zero column, a different column will appear, therein the particular sequence of light and dark spaces indicates the displacement. That sequence is detected by the phototransistors 24, which will feed it to the electronic circuit provided for processing that code and supplying the toe-in value in an intelligible fashion, as explained hereinafter.

For alingment measurements, the optics 6 projects a beam, designated in the figure with the reference number 60, onto the corresponding graduated flag 9, thereby the alignment reading is obtained in a conventional manner.

Described briefly here below is the operation of the electronic circuit associated with the measurement device. Initially, the input gate 35 is enabled which, being connected to the measurement selector 40 and diameter selector 41, supplies the microprocessor with information on the type of operations to be carried out. In particular, the input gate 35 supplies the types of measurements to be taken (camber, incidence, or toe-in), the diameter of the rim, if the measurement being taken preceeds or follows the adjustment. Moreover, the input gate 35 will request the microprocessor 30 to set or clear the incidence scales and twist. Then, in accordance with the measurements to be taken, the gates 37 and 39, or 36 and 38, are enabled to thus allow the input of the data present at the gates 42 to 45, corresponding to the phototransistors of the various flags. Then the microprocessor 30 will convert the stored information according to the Gray code into binary code information, process them according to the type of measurement taken, convert them into the ASCII code, and suitably re-locate them in the memory. Finally, the thusly processed data are transferred into the video display.

In the instance of wheel toe-in measurements, the microprocessor 30 will algebraically add the values relative to the toe-in of the left wheel and right wheel together, and supply the display with the sum value. Thus, it is no longer required that the operator performs that computation personally prior to carrying out the re-balancing operation proper, so that his job is made easier and no errors are possible any longer.

Furthermore, the microprocessor may be connected to an external memory, wherein the specification data of the various cars would be stored. Such data may then be displayed directly on the video display, thus eliminating the need to always keep a manual at hand for comparison of the specification data with the actual measured values.

As may be gathered from the foregoing description, the invention fully achieves its objects.

In fact, the apparatus according to the invention provides fully reliable measurements and is not liable to go out of adjustment in any way, since the reading scales are digital ones and the optical-electronic sensors are to detect the sequence of white and black spaces in the column projected thereat.

Moreover, the processing of the transducer signals takes place at numerical level, and therefore, is no longer affected by problems of thermal variation or ageing.

The apparatus of this invention, moreover, is quite versatile, because through the use of a microprocessor and video display it allows memory storage of measurements, either singly or as a whole. Such measurements may then be recalled by the operator to have an overall picture of the car trim condition, both before and after the corrections made. Future developments are also possible, such as the addition of a printer or tape recording the car specifications supplied by the manufacturers.

Another extremely advantageous feature of this apparatus is that the measurement scales for toe-in, camber and incidence simultaneously present, in addition to a digital section, also an analog section of conventional type for optically reading the car trim angles. In fact, the provision of analog scales enables the car trim to be simultaneously checked both on the screen connected to the microprocessor and on the optical scales, so that a dual form of checking becomes feasible, while affording a more reliable measurement. Furthermore, the simultaneous provision of optical scales ensures that, in the event of power outage to the microprocessor or failure in the electronic devices, the checks on the car trim can be effected all the same, e.g. by hooking up on the car battery, in any places, without requiring the screen and electronic circuit.

In this case too, the illustrated device will be advantageous over the prior art, because it does not require the time-consuming and complicated operations described in the preamble.

Lastly, extremely advantageous is the fact that the mirror is mounted on a pendulum, which enables

0071843

automatic reading of toe-in and eliminates the need
of  shifting manually the mirror in order to align
the scale on its reference, as was the case with
known apparatus.

The invention is susceptible to many modifications
and variations without departing from the scope of
the instant inventive concept.

Furthermore, all of the details may be replaced
with other technically equivalent elements.

In practicing the invention, the materials used
and the dimensions may be any selected ones to suit
applicational requirements.

## CLAIMS

1. An apparatus for checking the geometry of wheels, comprising a pair of projector lamps, reading scales, mirrors for reading the wheel toe-in, and flags or panels for measurement detecting, characterized in that said reading scales (11, 13) are digital scales.

2. An apparatus according to Claim 1, characterized in that said digital scales (11, 13) include a plurality of columns, each comprising a sequence of black and white spaces arranged in conformity with a given binary code, and that said detection flags (16, 17) have a slit (23) whereat there are arranged a plurality of optical-electronic sensors (24) adapted to detect a particular sequence of black and white spaces in the column of said scales which is projected at said slit.

3. An apparatus according to Claim 1, characterized in that said optical-electronic sensors (24) are coupled to a data processing unit (30) which receives information from said sensors, processes it, and supplies it as an output to a display unit (49).

4. An apparatus according to one or more of the preceding claims, characterized in that it comprises two reading scales (11, 13), one (13) of said scales being adapted for measurement of camber and incidence, the other (11) of said scalesbeing adapted for toe-in measurements.

5. An apparatus according to Claim 1, characterized in that said mirrors (8) for wheel toe-in reading are undetachably connected to a pendulum (21) such as to keep in a vertical position regardless of the inclination of said projector lamps (4) and provide automatic alignment of the toe-in scale.

6. An apparatus according to Claim 1, characterized in that said camber and incidence measuring scales (13) are connected undetachably to a pendulum (25) such as to keep in a vertical position regardless of the wheel trim.

7. An apparatus according to the preceding claims, characterized in that said reading scales (11, 13) further comprise a graduated section with analog scales adapted to enable measurement taking in case of failure of the electronic assembly.

8. An apparatus according to one or more of the preceding claims, characterized in that said data processing unit (30) comprises adder means effective to algebrically add together the electrical signals representing the values of the wheel half toe-in.

9. An apparatus according to one or more of the preceding claims, characterized in that said processing unit (30) may be connected to a read-out unit using magnetic supports for storing car specification data.

10. An apparatus for checking the geometry of wheels, substantially as herein described and illustrated.

0071843

Fig.1

Fig.2

Fig.3

Fig.4

Fig.5

Fig.6